# EUROPÄISCHE PATENTSCHRIFT

(11) **EP 3 460 340 B1**
(45) Veröffentlichungstag und Bekanntmachung des Hinweises auf die Patenterteilung: **26.05.2021**
(21) Anmeldenummer: 17192944.1
(22) Anmeldetag: 25.09.2017
(51) Int. Cl.: F24D 3/18, F24D 19/10

(54) **VERFAHREN ZUR BEREITSTELLUNG VON WÄRME, WÄRMEGEWINNUNGSANLAGE UND WÄRMEBEREITSTELLUNGSEINHEIT**
METHOD FOR PROVIDING HEAT, HEAT RECOVERY SYSTEM AND HEAT PROVISION UNIT
PROCÉDÉ DE FOURNITURE DE CHALEUR, INSTALLATION DE RÉCUPÉRATION DE CHALEUR ET UNITÉ DE FOURNITURE DE CHALEUR

(43) Veröffentlichungstag der Anmeldung: 27.03.2019
(73) Patentinhaber: ATF Anwendungszentrum für Technik und Forschung UG (haftungsbeschränkt), 73779 Deizisau (DE)
(72) Erfinder: SAIER, Frank, 72581 Dettingen an der Erms (DE); LEßMANN, Ingo, 73240 Wendlingen (DE)
(74) Vertreter: Klocke, Peter

(56) Entgegenhaltungen:
- EP-A1- 2 322 880
- WO-A2-2016/109861
- DE-A1-102010 033 142
- DE-U1-202009 007 774
- DE-U1-202010 005 384

## Beschreibung

Die vorliegende Erfindung betrifft ein Verfahren zur Bereitstellung von Wärme für eine erste Wärmepumpe zum Heizen eines Gebäudes, eine Wärmegewinnungsanlage zur Durchführung des Verfahrens sowie eine Wärmebereitstellungseinheit zur Verwendung mit einer ersten Wärmepumpe zum Heizen eines Gebäudes mit einem Gehäuse zur Aufnahme von Wärmetauschereinrichtungen.

Wärmepumpen sind allgemein bekannt. Je nach Anwendungsfall gibt es dabei verschiedene Wärmeträgermittel, wobei üblicherweise bei den hausseitigen Wärmepumpen auf der Sekundärseite für den Kreislauf im Haus Wasser verwendet wird. Unter Wärmeträgermittel wird im nachfolgenden jegliche übliche Transportflüssigkeit für Wärme verstanden, wie beispielsweise Sole, Wasser, Wasser mit Salz oder Alkohol. Unter Sole wird üblicherweise ein Wasser-Glykol-Gemisch verstanden. Des Weiteren sind übliche Luft/Wärmeträgermittel-Wärmetauscher in Form von Plattenwärmetauscher bekannt. Diese beiden verschiedenen Komponenten (Wärmepumpe und Luft/Wärmeträgermittel-Wärmetauscher) werden zusammenfassend als Wärmetauschereinrichtungen bezeichnet.

Es ist bekannt, zur Verbesserung des Wirkungsgrades von gebäudeseitigen Wärmepumpen verschiedene Heizsysteme zu kombinieren, da es bei einem gasförmigen Medium wie Luft sich ein stark erhöhter Energieaufwand bei sinkenden Temperaturen und bei einem flüssigen Medium (Wasser oder Sohle) meist aufwändige Bohrungen oder Verrohrung angebracht werden, um eine ausreichende Leistung zu erreichen. So beschreibt beispielsweise die DE 10 2010 033 142 A1 eine Hybridwärmepumpe, die zwei einzelne oder gleichzeitig wirkende Verdampfer, einen für gasförmigen und einen für flüssige Medien, aufweist, die beide auf der Kälteseite des Kältemittelkreislaufes angeordnet sind und vom Kältemittel durchströmt werden. Bei dieser Hybridwärmepumpe werden somit in einem Flüssigkeitskreislauf zusätzliche Wärmequellen wie Erdwärmequellen und/oder Solarkollektoren über einen Plattenwärmetauscher und einem Verdampfer für die Luft aus der Umgebung verwendet. Dieses System bezieht die Energie aus einem Speicher, in den die Erdwärmequellen und/oder Solarkollektoren einspeisen und ist auch nur über ein Teil des Jahres (ca. 8-9 Monate) wirtschaftlich in Betrieb. Eine derartige Hybridwärmepumpe ist jedoch nicht verwendbar, wenn die Grundstücke zusätzliche Erdwärmequellen nicht erlauben. Zudem sind oft restriktive Verordnungen der Länder zu beachten, welche nur unter Auflagen Erdsonden erlauben oder sogar ganz verbieten. Trotzdem besteht der Bedarf insbesondere im städtischen Bereich mit kleinen Grundstücken alternative Wärmequellen zu nutzen, wobei, wie vorstehend bereits erwähnt, sich bekanntlich der Energieaufwand bei sinkenden Temperaturen bei den bekannten, die Umgebungsluft ausnutzenden Systemen erhöht und damit der Wirkungsgrad absinkt.

Zum Stand der Technik wird zudem auf die Druckschriften EP 2 322 880 A1 und DE 20 2009 007 774 U1 verwiesen.

Die Offenlegungsschrift EP 2 322 880 A1 offenbart eine Wärmepumpenanlage mit genau einem Umweltwärmequellen-Kreislauf, in den mindestens eine Umweltwärmequelle als Wärmequelle integriert ist, wobei die Verdampfer von mindestens zwei Kältemittelkreisläufen baulich voneinander getrennter Wärmepumpen mit dem einen Umweltwärmequellen-Kreislauf verbunden sind. Als Umweltwärmequelle kommen dabei mindestens ein Luft-Sole-Wärmetauscher, eine Erdsonde, ein Solarabsorber, ein Abluft-Wärmetauscher und/oder eine Regenwasser-Zisterne mit Wärmetauscher zum Einsatz. Im Fall mehrerer Umweltwärmequellen sind die einzelnen Umweltwärmequellen mittels Umschalt- oder Abschaltventilen deaktivierbar. Vorzugsweise ist ein Niedertemperatur-Wärmespeicher mit dem Umweltwärmequellen-Kreislauf verbunden und/oder ist zu mindestens einer Wärmepumpe ein Zusatzheizgerät parallel oder seriell zur Erwärmung eines Heizkreislaufs und/oder von Brauchwasser zuschaltbar angeordnet.

Das Gebrauchsmuster DE 20 2009 007 774 U1 lehrt eine multifunktionale Wärmepumpe für die Kombination einer oder mehrerer Wärmequellen mittels indirekter Verdampfung, wobei ein oder mehrere Wärmequellenmodule an die Wärmepumpe anschließbar sind, die alle vom gleichen Frostschutzmittel durchströmt werden. Als Wärmequellenmodule sind Module für Umluft oder Außenluft, Erdwärme, Grundwasser, Abwasser, Solarkollektoren und für Abluft vorgesehen. Diese Module umfassen eine Umwälzpumpe, einen Lamellenwärmeaustauscher und einen Ventilator, wobei die integrierte Umwälzpumpe Rückschlagventil aus- und einkoppelbar ist. An die Wärmepumpe sind zudem mindestens zwei in Reihe geschaltete Verdampfer anschließbar, vorzugsweise ein vorgeschalteter Luftverdampfer mit einem Lamellenwärmeaustauscher und einen luftansaugenden Ventilator, sowie ein nachgeschalteter Verdampfer mit einem Plattenwärmetauscher, an dessen Sekundärseite eine Vielzahl unterschiedlicher Wärmequellenmodule anschließbar sind.

Der vorliegenden Erfindung liegt daher die Aufgabe zugrunde, hier Abhilfe zu schaffen und eine Möglichkeit vorzuschlagen, die einen ganzjährigen Betrieb zum Heizen und Aufbereitung von warmem Wasser unter Ausnutzung der Umgebungsluft ermöglicht und damit den Wirkungsgrad der Gesamtanlage gegenüber herkömmlichen Systemen erheblich verbessert.

Diese Aufgabe wird erfindungsgemäß durch ein Verfahren gemäß Anspruch 1 und eine Wärmegewinnungsanlage sowie eine Wärmebereitstellungseinheit gemäß den nebengeordneten Ansprüchen gelöst.

Danach wird bei dem erfindungsgemäßen Verfahren zur Bereitstellung von Wärme in Abhängigkeit von der Außentemperatur der das Gebäude umgebenden Luft und/oder dem Wirkungsgrad der ersten Wärmepumpe entweder mittels einer zweiten Wärmepumpe oder mittels eines Luft/Wärmeträgermittel-Wärmetauschers der diese umgebenden Luft Wärme entzogen und über das Wärmeträgermittel der ersten Wärmepumpe zugeführt. Bei diesem Verfahren wird somit der hausseitigen ersten Wärmepumpe eine Energiequelle zur Verfügung gestellt aus der die erste Wärmepumpe bei einem wesentlich besseren Wirkungsgrad die Heizungs-und Warmwasserversorgung des Gebäudes bewerkstelligen kann. Bei dem Verfahren wird die zweite Wärmepumpe mit ihrem eigenen Kältemittelkreislauf betrieben und arbeitet nur im Niedertemperaturbereich des Wärmeträgermittels für den die zweite Wärmepumpe optimiert ist. Dieser Bereich liegt optimaler Weise bei ca. 10°C - 30°C. Für diesen optimierten Bereich wird die Temperatur der Außenluft auf das Wärmeträgermittel übertragen und in üblicher Weise auf der Abgabeseite abgegeben und im vorliegenden Fall der ersten Wärmepumpe zugeführt. Die zweite Wärmepumpe wird daher bei einer Außenluft die geringer ist als ca. 3°C - 5°C anlaufen. Bei höheren Temperaturen wird mittels des Luft/Wärmeträgermittel-Wärmetauschers, beispielsweise einem Plattenwärmetauscher, der Umgebungsluft Wärme entzogen und diese der ersten Wärmepumpe zugeführt. Die zweite Wärmepumpe ist dann abgeschaltet. Die Umschaltung und Steuerung auf die jeweilige Energiequelle für die erste Wärmepumpe erfolgt entweder in Abhängigkeit von der Außentemperatur oder auch von dem Wirkungsgrad der gebäudeseitigen ersten Wärmepumpe.

Gemäß einer bevorzugten Ausbildung des Verfahrens wird als Flüssigkeit auf der Abgabeseite der zweiten Wärmepumpe das von der ersten Wärmepumpe zugeführte Wärmeübertragungsmittel verwendet. Dies ermöglicht eine optimale Ausgestaltung des Verfahrens insbesondere dann, wenn gemäß einer weiteren bevorzugten Ausbildung auch als Flüssigkeit für den Luft/Wärmeträgermittel-Wärmetauscher ebenfalls das von der ersten Wärmepumpe zugeführte Wärmeübertragungsmittel verwendet wird.

Gemäß einer besonders bevorzugten Ausgestaltung wird ein Pufferspeicher/Volumenspeicher verwendet, der zwischen der zweiten Wärmepumpe und dem Luft/Wärmeträgermittel-Wärmetauscher einerseits und der ersten Wärmepumpe andererseits angeordnet ist, um Schwankungen der Temperatur und des Volumenstroms in dem Wärmeträgermittelkreislauf abfedern zu können.

Die Zuführung der Luft zu der zweiten Wärmepumpe und dem Luft/Wärmeträgermittel-Wärmetauscher wird vorteilhafterweise gemeinsam zugeführt um eine möglichst platzsparende Wärmebereitstellungseinheit, in der die zweite Wärmepumpe und der Luft/Wärmeträgermittel-Wärmetauscher integriert sind, bereitstellen zu können.

In der erfindungsgemäßen Wärmegewinnungsanlage zur Durchführung des Verfahrens ist die gebäudeseitige erste Wärmepumpe über einen Pufferspeicher direkt oder indirekt mit mindestens einer außerhalb des Gebäudes angeordneten Wärmebereitstellungseinheit über Leitungen verbunden, die die zweite Wärmepumpe und den Luft/Wärmeträgermittel-Wärmetauscher entweder getrennt oder gemeinsam umfasst sowie Ventileinrichtungen für die Verbindung der zweiten Wärmepumpe oder des Luft/Wärmeträgermittel-Wärmetauschers mit den zu der ersten Wärmepumpe führenden Leitungen und eine Steuer- und Regeleinrichtung zur Steuerung der Ventileinrichtungen aufweist. Die Steuer- und Regeleinrichtung übernimmt zumindest die Steuerung und Regelung der Wärmetauschereinrichtungen sowie der Ventileinrichtungen in der Wärmebereitstellungseinheit. Die neuartige Wärmegewinnungsanlage zeichnet sich dadurch aus, dass die Wärmebereitstellungseinheit als neue Energiequelle für die gebäudeseitige erste Wärmepumpe ohne großen Aufwand angeschlossen und zur Verfügung gestellt werden kann, wobei ein wesentlich höhere Gesamtwirkungsgrad über das ganze Jahr erreicht werden kann. Besonders bevorzugt umfasst die Wärmebereitstellungseinheit in einem Gehäuse die zweite Wärmepumpe und den Luft/Wärmeträgermittel-Wärmetauscher sowie die Ventileinrichtungen. Die Steuerung und Regelung kann je nach Bedarf entweder über die Steuer- und Regeleinrichtung der ersten Wärmepumpe oder durch die Steuer- und Regeleinrichtung in der Wärmebereitstellungseinheit in Kommunikation mit der Steuer- und Regeleinrichtung der ersten Wärmepumpe erfolgen.

Zweckmäßigerweise weist das Gehäuse, wenn die Wärmebereitstellungseinheit in dem Gehäuse die zweite Wärmepumpe und den Luft/Wärmeträgermittel-Wärmetauscher aufweist, Lüftungsöffnungen auf, die für beide Einheiten zur Verfügung stehen, wobei für die zweite Wärmepumpe und der Luft/Wärmeträgermittel-Wärmetauscher gemeinsame oder getrennte Lüftereinrichtungen aufweisen.

Die erfindungsgemäße Wärmebereitstellungseinheit weist eine zweite Wärmepumpe und einen Luft/Wärmeträgermittel-Wärmetauscher sowie eine Ventileinrichtung auf, wobei die Ventileinrichtung entweder die Abgangsseite der zweiten Wärmepumpe oder die Abgangsseite des Luft/Wärmeträgermittel-Wärmetauschers mit der Eingangsseite der ersten Wärmepumpe in Abhängigkeit von der Temperatur der Umgebungsluft oder dem Wirkungsgrad der ersten Wärmepumpe verbindet. Die zweite Wärmepumpe weist einen eigenen Kreislauf auf und liefert ihre Wärme an den Primärkreislauf der ersten Wärmepumpe. Wie bereits ausgeführt, dient die Wärmebereitstellungseinheit als Energiequelle für die gebäudeseitige erste Wärmepumpe und erlaubt einen Betrieb in einem deutlich erhöhten Wirkungsgrad gegenüber bisherigen Anlagen über das ganze Jahr. Eine derartige Wärmebereitstellungseinheit ist besonders vorteilhaft, wenn keine Möglichkeit besteht, andere Energiequellen wie Erdwärme oder Solarenergie zu nutzen oder genutzt werden sollen.

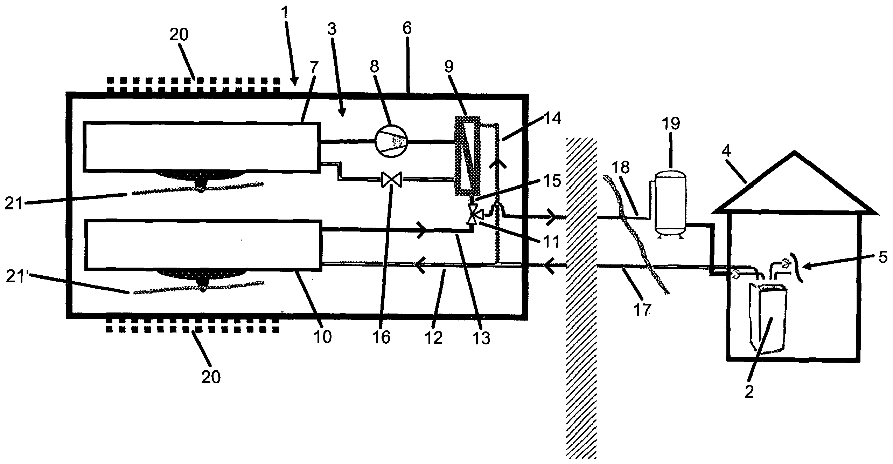

Nachfolgend wird die Erfindung anhand eines Ausführungsbeispiels in Verbindung mit der begleitenden Zeichnung näher erläutert, wobei die Merkmale in der Beschreibung oder Patentansprüchen auch einzeln oder in Kombination verwendet werden können. Weitere Vorteile, Merkmale und Einzelheiten der Erfindung ergeben sich aus den Ansprüchen, der nachfolgenden Beschreibung der bevorzugten Ausführungsform sowie anhand der Zeichnung. Die einzige Figur zeigt in schematischer Darstellung die Ausgestaltung einer erfindungsgemäßen Wärmegewinnungsanlage.

Die Wärmegewinnungsanlage weist eine Wärmebereitstellungseinheit 1 auf, die als eigenständige Energiequelle zur Versorgung einer beliebigen gebäudeseitigen ersten Wärmepumpe 2 ausgestattet ist und über Leitungen 17, 18 sowie einen Pufferspeicher 19 mit dieser verbunden ist. Die Wärmebereitstellungseinheit 1 weist in einem Gehäuse 6 eine zweite Wärmepumpe 3 auf, die in übliche Art und Weise einen Verdampfer 7, Verdichter 8 für das Kältemittel, Verflüssiger 9 und Expansionsventil 16 aufweist. Ein üblicher Kältemittelkreislauf nimmt die von außen kommende Wärme über den Verdampfer 7 auf und transportiert das erwärmte Kältemittel über einen Verdichter (Kompressor) 8 zu einem Verflüssiger 9 über den die Wärme wieder entnommen und einem Heizkreislauf zugeführt wird. Von dem Verflüssiger 9 gelangt das Kältemittel über ein Expansionsventil 16 wieder zurück zum Verdampfer 7. In dem Gehäuse 6 befindet sich außerdem ein Luft/Wärmeträgermittel-Wärmetauscher 10 sowie Ventilatoren 21, 21', die die Luft über die Luftspalte 20 im Gehäuse durch das Gehäuse bewegen. Der Luft/Wärmeträgermittel-Wärmetauscher 10 kann als üblicher Plattenwärmetauscher ausgestaltet sein und ist mit einer Vorlaufleitung 12 mit der Rücklaufleitung 17 von der ersten hausseitigen Wärmepumpe 2 verbunden. Grundsätzlich ist es auch möglich, den Verdampfer 7 und den Luft/Wärmeträgermittel-Wärmetauscher 10 als eine Einheit mit zwei getrennten Kreisläufen für das Wärmeträgermittel (zweite Wärmepumpe 3/ Luft/Wärmeträgermittel-Wärmetauscher 10) auszubilden. Die Rücklaufleitung 13 vom Luft/Wärmeträgermittel-Wärmetauscher 10 ist über ein Umschaltventil 11 mit der warmen Vorlaufleitung 18 zur ersten Wärmepumpe 2 verbunden. An das Umschaltventil 11 ist außerdem die Rücklaufleitung 15 vom Verflüssiger 9 der zweiten Wärmepumpe 3 angeschlossen. Die kalte Rücklaufleitung 17 von der ersten Wärmepumpe 2 ist als Zulaufleitung 14 an die zweite Wärmepumpe 3 angeschlossen. In die Vorlaufleitung 18 zu der ersten Wärmepumpe 2 mit dem von der Wärmebereitstellungseinheit 1 kommenden warmen Wärmeträgermittel ist der Pufferspeicher 19 angeordnet. Je nach Bedarfsanforderung durch die erste Wärmepumpe 2 oder durch die Höhe der Außentemperatur an der Wärmebereitstellungseinheit 1 wird das Umschaltventil 11 über eine nicht dargestellte Steuer- und Regeleinheit geschaltet, so das entweder Energie von der zweiten Wärmepumpe 3 oder dem Luft/Wärmeübertragungsmittel-Wärmetauscher 10 der gebäudeseitigen ersten Wärmepumpe 2 zugeführt wird, die in dem Gebäude 4 über den sekundärseitigen im Heizkreislauf 5 die entsprechende Versorgung mit Warmwasser/Heizungswasser gewährleistet.

## Patentansprüche

1. Verfahren zur Bereitstellung von Wärme für eine erste Wärmepumpe (2) zum Heizen eines Gebäudes (4), **dadurch gekennzeichnet, dass** der ersten Wärmepumpe (2) sowohl mit einer zweiten Wärmpumpe (3) als auch mit einem Luft/Wärmeträgermittel-Wärmetauscher (10) Wärme zugeführt werden kann und dass in Abhängigkeit von der Außentemperatur der das Gebäude (4) umgebenden Luft und/oder dem Wirkungsgrad der ersten Wärmepumpe (2) entweder mittels der zweiten Wärmepumpe (3) oder mittels eines Luft/Wärmeträgermittel-Wärmetauschers (10) der diese umgebenden Luft Wärme entzogen und über das Wärmeträgermittel der ersten Wärmepumpe (2) zugeführt wird.

2. Verfahren nach Anspruch 1, **dadurch gekennzeichnet, dass** als Flüssigkeit auf der Abgabeseite der zweiten Wärmepumpe (3) das von der ersten Wärmepumpe (2) zugeführte Wärmeübertragungsmittel verwendet wird.

3. Verfahren nach Anspruch 1 oder Anspruch 2, **dadurch gekennzeichnet, dass** als Flüssigkeit für den Luft/Wärmeträgermittel-Wärmetauscher (10) das von der ersten Wärmepumpe (2) zugeführte Wärmeträgermittel verwendet wird.

4. Verfahren nach einem der vorangegangenen Ansprüche, **dadurch gekennzeichnet, dass** zwischen der zweiten Wärmepumpe (3) und dem Luft/Wärmeträgermittel-Wärmetauscher (10) einerseits und der ersten Wärmepumpe (2) andererseits ein Pufferspeicher/Volumenspeicher (19) angeordnet wird.

5. Verfahren nach einem der vorangegangenen Ansprüche, **dadurch gekennzeichnet, dass** die Luft der zweiten Wärmepumpe (3) und dem Luft/Wärmeträgermittel-Wärmetauscher (10) gemeinsam zugeführt wird.

6. Wärmebereitstellungseinheit (1) zur Verwendung mit einer ersten Wärmepumpe (2) zum Heizen eines Gebäudes (4), mit einem Gehäuse (6) zur Aufnahme von Wärmetauschereinrichtungen (3, 10), **gekennzeichnet durch** eine zweite Wärmepumpe (3) und einen Luft/Wärmeträgermittel-Wärmetauscher (10) sowie eine Ventileinrichtung (11), wobei eine Steuer- und Regeleinrichtung dazu eingerichtet ist, mittels der Ventileinrichtung (11) entweder die Abgangsseite der zweiten Wärmepumpe (3) oder die Abgangsseite des Luft/Wärmeträgermittel-Wärmetauschers (10) mit der Eingangsseite der ersten Wärmepumpe (2) in Abhängigkeit von der Temperatur der Umgebungsluft oder dem Wirkungsgrad der ersten Wärmepumpe (2) zu verbinden.

7. Wärmegewinnungsanlage zur Durchführung des Verfahrens nach einem oder mehreren der vorstehenden Ansprüche 1 bis 5, **dadurch gekennzeichnet, dass** die gebäudeseitige erste Wärmepumpe (2) über einen Pufferspeicher/Volumenspeicher direkt (19) oder indirekt mit mindestens einer außerhalb des Gebäudes (4) angeordneten Wärmebereitstellungseinheit (1) nach Anspruch 6 über Leitungen (17, 18) verbunden ist, wobei die Ventileinrichtung (11) die Verbindung der zweiten Wärmepumpe (3) oder des Luft/Wärmeträgermittel-Wärmetauschers (10) mit der zu der ersten Wärmepumpe (2) führenden Leitung (17) herstellt. (3) und der Luft/Wärmeträgermittel-Wärmetauscher (10) gemeinsame oder getrennte Lüftereinrichtungen (21, 21') aufweisen.

8. Wärmegewinnungsanlage nach Anspruch 7, **dadurch gekennzeichnet, dass** die Wärmebereitstellungseinheit (1) in einem Gehäuse (6) die zweite Wärmepumpe (3) und den Luft/Wärmeträgermittel-Wärmetauscher (10) sowie die Ventileinrichtung (11) umfasst

9. Wärmegewinnungsanlage nach Anspruch 8, **dadurch gekennzeichnet, dass** das Gehäuse (6) Lüftungsöffnungen (20) aufweist und die zweite Wärmepumpe (3) und der Luft/Wärmeträgermittel-Wärmetauscher (10) gemeinsame oder getrennte Lüftereinrichtungen (21, 21') aufweisen.

## Claims

1. Method for providing heat for a first heat pump (2) for heating a building (4), **characterised in that** heat can be supplied to the first heat pump (2) by means of a second heat pump (3) and an air/heat transfer medium heat exchanger (10), and **in that**, depending on the outside temperature of the air surrounding the building (4) and/or the efficiency of the first heat pump (2), heat is extracted either by means of the second heat pump (3) or by means of the air/heat transfer medium heat exchanger (10) from the air surrounding said second heat pump (3) or air/heat transfer medium heat exchanger (10), and is supplied to the first heat pump (2) via the heat transfer medium.

2. Method according to claim 1, **characterised in that** the heat transfer medium supplied by the first heat pump (2) is used as liquid on the output side of the second heat pump (3).

3. Method according to either claim 1 or claim 2, **characterised in that** the heat transfer medium supplied by the first heat pump (2) is used as liquid for the air/heat transfer medium heat exchanger (10).

4. Method according to any of the preceding claims, **characterised in that** a buffer tank/volume tank (19) is arranged between the second heat pump (3) and the air/heat transfer medium heat exchanger (10) on one side and the first heat pump (2) on the other side.

5. Method according to any of the preceding claims, **characterised in that** the air is supplied jointly to the second heat pump (3) and the air/heat transfer medium heat exchanger (10).

6. Heat providing unit (1) for use with a first heat pump (2) for heating a building (4), comprising a housing (6) for accommodating heat exchanger devices (3, 10), **characterised by** a second heat pump (3), an air/heat transfer medium heat exchanger (10) and a valve device (11), an open-loop and closed-loop control device being designed to connect either the outlet side of the second heat pump (3) or the outlet side of the air/heat transfer medium heat exchanger (10) to the inlet side of the first heat pump (2) by means of the valve device (11), depending on the temperature of the ambient air or the efficiency of the first heat pump (2).

7. Heat generating system for carrying out the method according to one or more of preceding claims 1 to 5, **characterised in that** the building-side first heat pump (2), via a buffer tank/volume tank (19), is directly or indirectly connected via lines (17, 18) to at least one heat providing unit (1) according to claim 6 that is arranged outside the building (4), the valve device (11) establishing the connection between the second heat pump (3) or the air/heat transfer medium heat exchanger (10) and the line (17) leading to the first heat pump (2).

8. Heat generating system according to claim 7, **characterised in that** the heat providing unit (1) comprises the second heat pump (3), the air/heat transfer medium heat exchanger (10) and the valve device (11) in a housing (6).

9. Heat generating system according to claim 8, **characterised in that** the housing (6) has ventilation openings (20) and the second heat pump (3) and the air/heat transfer medium heat exchanger (10) have common or separate ventilator devices (21, 21').

## Revendications

1. Procédé conçu pour procurer de la chaleur et destiné à une première pompe à chaleur (2), en vue du chauffage d'un bâtiment (4), **caractérisé par le fait que** de la chaleur peut être délivrée à la première pompe à chaleur (2) aussi bien à l'aide d'une seconde pompe à chaleur (3), qu'à l'aide d'un échangeur (10) de chaleur air/agent caloporteur ; et **par le fait qu'**en fonction de la température extérieure de l'air environnant le bâtiment (4), et/ou du rendement de la première pompe à chaleur (2), soit au moyen de ladite seconde pompe à chaleur (3), soit au moyen dudit échangeur (10) de chaleur air/agent caloporteur, de la chaleur est prélevée de l'air environnant ces derniers, et est délivrée à ladite première pompe à chaleur (2) par l'intermédiaire dudit agent caloporteur.

2. Procédé selon la revendication 1, **caractérisé par le fait que** l'agent caloporteur, délivré par la première pompe à chaleur (2), est utilisé en tant que fluide du côté refoulement de la seconde pompe à chaleur (3).

3. Procédé selon la revendication 1 ou 2, **caractérisé par le fait que** l'agent caloporteur, délivré par la première pompe à chaleur (2), est utilisé en tant que fluide dédié à l'échangeur (10) de chaleur air/agent caloporteur.

4. Procédé selon l'une des revendications précédentes, **caractérisé par le fait qu'**un accumulateur tampon/réservoir (19) est interposé entre la seconde pompe à chaleur (3) et l'échangeur (10) de chaleur air/agent caloporteur, d'une part, et la première pompe à chaleur (2) d'autre part.

5. Procédé selon l'une des revendications précédentes, **caractérisé par le fait que** l'air est délivré, conjointement, à la seconde pompe à chaleur (3) et à l'échangeur (10) de chaleur air/agent caloporteur.

6. Unité (1) de fourniture de chaleur, conçue pour être utilisée avec une première pompe à chaleur (2) en vue du chauffage d'un bâtiment (4), munie d'un boîtier (6) destiné à recevoir des dispositifs (3, 10) d'échange thermique, **caractérisée par** une seconde pompe à chaleur (3) et par un échangeur (10) de chaleur air/agent caloporteur, ainsi que par un dispositif de distribution (11), sachant qu'un dispositif de commande et de régulation est agencé en vue de raccorder au côté entrée de la première pompe à chaleur (2) au moyen dudit dispositif de distribution (11), en fonction de la température de l'air environnant ou du rendement de ladite première pompe à chaleur (2), soit le côté sortie de ladite seconde pompe à chaleur (3), soit le côté sortie dudit échangeur (10) de chaleur air/agent caloporteur.

7. Installation de récupération de chaleur dévolue à la mise en œuvre du procédé conforme à l'une ou plusieurs des revendications 1 à 5 précédentes, **caractérisée par le fait que** la première pompe à chaleur (2), située côté bâtiment, est raccordée directement ou indirectement par l'intermédiaire d'un accumulateur tampon/réservoir (19), au moyen de conduits (17, 18), à au moins une unité (1) de fourniture de chaleur conforme à la revendication 6, implantée à l'extérieur du bâtiment (4), sachant que le dispositif de distribution (11) instaure la liaison de la seconde pompe à chaleur (3), ou de l'échangeur (10) de chaleur air/agent caloporteur, avec le conduit (17) menant à ladite première pompe à chaleur (2).

8. Installation de récupération de chaleur selon la revendication 7, **caractérisée par le fait que** l'unité (1) de fourniture de chaleur inclut, dans un boîtier (6), la seconde pompe à chaleur (3) et l'échangeur (10) de chaleur air/agent caloporteur, ainsi que le dispositif de distribution (11).

9. Installation de récupération de chaleur selon la revendication 8, **caractérisée par le fait que** le boîtier (6) est percé d'orifices d'aération (20), et la seconde pompe à chaleur (3) et l'échangeur (10) de chaleur air/agent caloporteur sont munis de dispositifs de ventilation (21, 21') communs ou distincts.
